# EUROPÄISCHE PATENTSCHRIFT

(11) **EP 3 208 582 B1**
(45) Veröffentlichungstag und Bekanntmachung des Hinweises auf die Patenterteilung: **20.01.2021**
(21) Anmeldenummer: 16156026.3
(22) Anmeldetag: 17.02.2016
(51) Int. Cl.: G01G 7/04

(54) **DIFFERENZMESSSCHALTUNG UND WAAGE MIT KRAFTKOMPENSATION**
DIFFERENCE MEASURING CIRCUIT AND A WEIGHING APPARATUS WITH FORCE COMPENSATION
CIRCUIT DE MESURE DE DIFFÉRENCE ET BALANCE AVEC ÉQUILIBRAGE DES FORCES

(43) Veröffentlichungstag der Anmeldung: 23.08.2017
(73) Patentinhaber: Mettler-Toledo GmbH, 8606 Greifensee (CH)
(72) Erfinder: Koller, David, 8050 Zürich (CH); Bucher, Cyrill, 8320 Fehraltdorf (CH); Trautweiler, Christoph, 8105 Regensdorf (CH)
(74) Vertreter: Mettler-Toledo

(56) Entgegenhaltungen:
- DE-A1- 2 742 146
- DE-A1- 10 153 603
- DE-U1-202012 012 781
- JP-A- S59 231 421

## Beschreibung

Die Erfindung betrifft eine Differenzmessschaltung für eine Waage mit elektromagnetischer Kraftkompensation sowie eine Waage mit elektromagnetischer Kraftkompensation.

Eine Waage mit elektromagnetischer Kraftkompensation, welche eine Regeleinrichtung mit einer Differenzmessschaltung aufweist, ist z.B. aus [1], DE 101 53 603 A1, bekannt. Die darin beschriebene Waage weist, wie nachstehend in Fig. 1 gezeigt, ein topfförmiges Permanentmagnetsystem 109 mit einem Luftspalt auf, in dem eine mit einem beweglichen Messhebel 106 verbundene Spule 110 angeordnet ist, die von einem Kompensationsstrom I_{comp} durchflossen wird, dessen Mass von der auf den Messhebel 106 einwirkenden Kraft abhängt. Die Lage des Messhebels 106 wird mittels einer opto-elektrischen Messvorrichtung 111 gemessen, die mit einer Regeleinrichtung 10' verbunden ist, welche den Kompensationsstrom I_{comp} in Abhängigkeit der zugeführten Messsignale derart regelt, dass der Messhebel 106 stets in gleicher Lage gehalten oder nach einer Laständerung zurückgeführt wird.

Das Permanentmagnetsystem 109 ist in einer Konsole 104 angeordnet, die mittels Biegelagern 103a über Parallelführungslenker 103 mit einem Gehänge 101 verbunden ist, das einen zur Aufnahme einer zu messenden Last dienenden Ausleger 101a aufweist. Die Normalkomponente der von einer Last bewirkten Kraft wird vom Gehänge 101 durch eine Koppel 105 auf den Messhebel 106 übertragen, der mittels eines Biegelagers 107 an einem Teil 104b der Konsole 104 aufgehängt ist.

Zur Messung der Position des Messhebels 106 weist die opto-elektrische Messvorrichtung 111 zwei Fotodioden D1, D2 auf, die auf der Innenseite eines von der Konsole 104 gehaltenen Winkelteils 104a einer Leuchtdiode D3 gegenüber angeordnet sind. In den Raum zwischen den Fotodioden D1, D2 und der Leuchtdiode D3 ragt ein als Blende oder Schlitzblende ausgebildetes und mit einer Schlitzöffnung 106a versehenes Endstück 106b des Messhebels 106 derart hinein, dass von der Leuchtdiode D3 abgegebene Strahlung abhängig von der Position der Blende 106b durch die Schlitzöffnung 106a zu den Fotodioden D1, D2 gelangen kann, welche der Regeleinrichtung 10' entsprechende Fotoströme I₁ und I₂ zuführen. Bei einer Drehung des Messhebels 106 aus seiner Ausgangslage oder Normallage gelangt dabei mehr Strahlung zur ersten oder zur zweiten Fotodiode D1, D2, weshalb unterschiedliche Fotoströme I₁ und I₂ über Anschlussleitungen I1, I2 zur Regeleinrichtung 10' gelangen.

Die Regeleinrichtung 10' weist eine Differenzmessschaltung 1' auf, die anhand der beiden Ströme I₁ und I₂ eine Differenzspannung u_{Δ} bildet, welche gleich Null wird, wenn die Fotoströme I₁ und I₂ gleich gross sind. Die Differenzspannung u_{Δ} wird einer nachgeschalteten Treiberschaltung 2 zugeführt, die einen entsprechenden Kompensationsstrom I_{comp} über einen Referenzwiderstand 3 an die Spule 110 abgibt, wodurch eine zur Last korrespondierende Gegenkraft erzeugt wird, welche den Messhebel 106 in die Ausgangslage zurückführt. Die am Referenzwiderstand 3 durch den Kompensationsstrom I_{comp} verursachte Spannung wird von einem Wandlermodul A/D erfasst und in einen entsprechenden digitalen Wert gewandelt, der auf einer Anzeigeeinheit DSP angezeigt wird.

Weitere Differenzmessschaltungen, die zur Bildung eines Differenzsignals aus zwei Signalen geeignet sind, die von zwei Fotodioden abgegeben werden, sind z.B. aus [2], US 3,727,708 A, sowie [3], DE 2 311 676 A, bekannt.

In [3] ist ein berührungslos arbeitender Weg-Spannungswandler mit einer aus zwei Einzeldioden bestehenden Differential-Fotodiode beschrieben, der durch den Schlitz einer verschiebbaren Blende, z.B. durch den im Endstück 106b des Messhebels 106 vorgesehenen Schlitz 106a, optische Strahlung zuführbar ist. Die von den Fotodioden und abgegebenen Fotoströme werden bei dieser Schaltungsanordnung über einen ersten bzw. zweiten Operationsverstärker, in denen zu den Fotoströmen proportionale Spannungen gebildet werden, den Eingängen eines dritten Operationsverstärkers zugeführt, an dessen Ausgang ein Differenzsignal gebildet wird, das proportional zur Differenz der Ausgangsspannungen der ersten beiden Operationsverstärker und proportional zum Verschiebeweg der Schlitzblende ist.

Zur Bildung des Differenzsignals werden in den in [2] und [3] beschriebenen Differenzmessschaltungen mehrere Widerstände und Operationsverstärker benötigt, deren Temperatur- und Betriebsverhalten das resultierende Differenzsignal ungünstig beeinflussen können, wodurch in einer Waage mit elektromagnetischer Kraftkompensation Messfehler verursacht werden. Operationsverstärker weisen oft störende Offsetspannungen auf, welche, wie Widerstände, in Abhängigkeit einer oft nicht stabilen Umgebungstemperatur störende Abweichungen erfahren können.

Zur Vermeidung der Nachteile der in [2] und [3] offenbarten Schaltungsanordnungen wurde in [1] die nachstehend in den Figuren 2a und 2b gezeigte Differenzmessschaltung 1' vorgeschlagen, der von zwei Fotodioden D1, D2 abgegebene Fotoströme I₁, I₂ zuführbar sind. Die Differenzmessschaltung 1' bildet ein zur Differenz der Fotoströme I₁, I₂ proportionales Ausgangssignal u_{Δ}, das weitgehend unabhängig von Schwankungen der Umgebungstemperatur ist. Dazu ist ein Schalter SW derart mit den beiden Fotodioden D1, D2 und dem invertierenden Eingang eines ersten Operationsverstärkers OA_{Δ} verbunden und von einer Steuereinheit CTRL zwischen zwei Zuständen zₜ₁, zₜ₂ periodisch umschaltbar, dass während eines ersten Periodenanteils t₁ im ersten Schaltzustand zₜ₁ der erste Fotostrom I₁ und während eines zweiten, gleich grossen Periodenanteils t₂ im zweiten Schaltzustand zₜ₂ der zweite Fotostrom I₂ über einen ersten Knotenpunkt K_{Δ} dem invertierenden Eingang des ersten Operationsverstärkers OA_{Δ} zugeführt wird. Der erste Operationsverstärker OA_{Δ}, dessen Ausgang, an dem das Ausgangssignal u_{Δ} gebildet wird, ist mittels eines parallel zu einem Kondensator C_{Δ} geschalteten Widerstandes R_{Δ} mit dessen invertierendem Eingang verbunden und arbeitet als verzögernder Proportional-Regler.

Dem invertierenden Eingang eines zweiten Operationsverstärkers OA_{Σ}, der an einem zweiten Knotenpunkt K_{Σ} anliegt, wird von einer Referenzspannungsquelle U₀ über einen Referenzwiderstand R₀ ein Referenzstrom I₀ zugeführt, so dass in Abhängigkeit der Differenz der während des ersten Periodenanteils fliessenden Fotoströme I₁, I₂ und des während des ersten und des zweiten Periodenanteils fliessenden Referenzstromes I₀ am Ausgang des weiteren Operationsverstärkers OA_{Σ} eine Summenspannung u_{Σ} gebildet wird, die abhängig von der Grösse des Referenzstroms I₀ und der Fotoströme I₁, I₂ ist. Der zweite Operationsverstärker OA_{Σ}, dessen Ausgang durch einen Kondensator C_{Σ} mit dem invertierenden Eingang verbunden ist, ist als Integrator beschaltet. Durch Regelung der Betriebsspannung der Leuchtdiode D3 in Abhängigkeit der Summenspannung u_{Σ} werden die Fotoströme I₁, I₂ konstant gehalten.

Die in [1] offenbarte Schaltungsanordnung, die relativ einfach aufgebaut ist, sieht somit vor, dass die Fotoströme I₁, I₂ sequenziell an die Differenzmessschaltung 1' angelegt werden, weshalb die Differenzbildung mit einer entsprechenden Verzögerung erfolgt und die Information des nicht angelegten Fotostromes I₁ oder I₂ jeweils verloren geht. Ferner erfolgt eine Verzögerung durch den ersten Operationsverstärker OA_{Δ}, der als verzögernder Proportional-Regler arbeitet. Weiterhin ist die Spannung an den Kathoden der Fotodioden D1, D2 nicht definiert und ändert möglicherweise beim Umschalten des Schalters SW. Die Symmetrie der Schaltung, bei der der erste Fotostrom I1 die virtuelle Masse am invertierenden Eingang des zweiten Operationsverstärkers OA_{Σ} durchfliesst, während der zweite Fotostrom I₂ die tatsächliche Masse an der Anode der zweiten Fotodiode D2 durchfliesst, ist nicht gewährleistet.

Waagen mit elektromagnetischer Kraftkompensation, wie sie oben beschrieben wurden, sind weitgehend ausgereift. Die angewendete Technologie ist einfach und effizient. Konsequenterweise lassen sich mit dieser Technologie hingegen Fortschritte nur noch mit erheblichem Aufwand erzielen.

Der vorliegenden Erfindung liegt daher die Aufgabe zugrunde, eine verbesserte Differenzmessschaltung für eine Waage mit elektromagnetischer Kraftkompensation sowie eine verbesserte Waage mit elektromagnetischer Kraftkompensation zu schaffen.

Insbesondere soll eine Differenzmessschaltung geschaffen werden, die einerseits einfach aufgebaut ist und andererseits rasch und zuverlässig ein präzises Ausgangssignal liefert.

Die Differenzmessschaltung soll in allen möglichen Zuständen, ggf. Schaltzuständen stabil arbeiten. Die einzelnen Bauteile sollen mit definierten Betriebsparametern betrieben werden, die von Schaltvorgängen nicht beeinflusst sind. Mittels der Erfindung soll ein einfacher symmetrischer Schaltungssaufbau erzielt werden, der robust gegen einwirkende Störungen ist.

Verwendete Fotodioden sollen konstant in einem idealen Arbeitsbereich betrieben werden können. Die Umschaltung der Fotoströme, die Störungen verursachen kann, soll vorzugsweise vermieden werden.

Ein Verlust von Informationen bei der Auswertung der Messsignale soll vermieden werden.

Ferner soll ein Ausgangssignal erzeugt werden, welches vorteilhaft weiter verarbeitet werden kann.

Die erfindungsgemässe Waage mit elektromagnetischer Kraftkompensation soll es erlauben, Wagen an unterschiedliche Anwendungsgebiete zu adaptieren, insbesondere um dort auftretende Störungen besser begegnen zu können und die Messergebnisse weiter zu verbessern.

Diese Aufgaben werden mit einer Differenzmessschaltung für eine Waage mit elektromagnetischer Kraftkompensation sowie mit einer Waage mit elektromagnetischer Kraftkompensation gelöst, welche die in Anspruch 1 bzw. 12 angegebenen Merkmale aufweisen. Vorteilhafte Ausgestaltungen der Erfindung sind in weiteren Ansprüchen angegeben.

Die für den Einsatz in einer Waage mit elektromagnetischer Kraftkompensation vorgesehene Differenzmessschaltung, der von zwei Fotodioden abgegebene Fotoströme zuführbar sind und die geeignet ist, ein zur Differenz dieser Fotoströme proportionales Ausgangssignal zu erzeugen, umfasst einen Schalter, der innerhalb von zwei Periodenanteilen einer Periodendauer zwischen zwei Zuständen umschaltbar ist, um den Stromfluss durch einen Knotenpunkt zu beeinflussen, dem die beiden Fotoströme zuführbar sind.

Erfindungsgemäss ist der Schalter derart steuerbar, dass ein von einer Spannungs- oder Stromquelle abgegebener Referenzstrom innerhalb der Periodenanteile alternierend einem der beiden Fotoströme überlagerbar ist, die dem Knotenpunkt permanent zufliessen. Der Knotenpunkt liegt am Eingang eines Integrators, dessen Integratorsignal in einem Komparator mit einem zyklisch verlaufenden Rampensignal vergleichbar ist, welches die genannte Periodendauer aufweist, wobei am Ausgang des Komparators ein rechteckförmiges Komparatorsignal erzeugbar ist, dessen Tastverhältnis durch den Schnittpunkt des Integratorsignal und des Rampensignals definiert ist und das einem Steuereingang des Schalters zuführbar ist.

Erfindungsgemäss werden die Fotoströme somit nicht alternierend zu- und abgeschaltet, sondern beide permanent verwertet, weshalb die zur Verfügung stehende Information, welche die Position einer Blende, durch die hindurch Licht zu den beiden Fotodioden gelangen kann, ohne Verlust genutzt werden kann.

Durch den Schalter wird den beiden Fotoströmen alternierend ein Referenzstrom überlagert. Innerhalb des ersten Periodenanteils wird dem ersten Fotostrom der Referenzstrom überlagert und innerhalb des zweiten Periodenanteils wird dem zweiten Fotostrom der Referenzstrom überlagert. Die kritischen Fotoströme selbst werden nicht geschaltet, sondern der unkritische Referenzstrom, weshalb Störungen vermieden werden und die Symmetrie der Schaltung stets gewahrt bleibt.

Die erfindungsgemässe Differenzmessschaltung ist derart stabil, dass für die Lieferung des Referenzstroms keine besondere Referenzstromquelle erforderlich ist. Vorteilhaft kann der Referenzstrom durch einen Referenzwiderstand fliessen, der mit der Betriebsspannung der Schaltungsanordnung verbunden ist.

Vorteilhaft ist ferner, dass die Elektroden der Fotodioden nicht geschaltet werden. Stattdessen sind z.B. die Kathoden der Fotodioden mit einem gemeinsamen Spannungspotenzial, z.B. einer stabilen Betriebsspannung verbunden. Die Fotodioden können konventionell derart beschaltet werden, dass sie in einem bevorzugten Bereich der Kennlinien arbeiten und gegebenenfalls mit einer Vorspannung betrieben werden.

In einer vorzugsweisen Ausgestaltung ist die erste Elektrode, z.B. die Anode der ersten Fotodiode direkt mit dem Knotenpunkt verbunden. Die erste Elektrode bzw. die Anode der zweiten Fotodiode ist hingegen über einen Inverter, in dem der zweite Fotostrom invertiert wird, mit dem Knotenpunkt verbunden. Die zweiten Elektroden der beiden Fotodioden sind hingegen mit dem gemeinsamen Spannungspotenzial verbunden.

Nach der Invertierung eines Fotostroms können die beiden Fotoströme zur Bildung eines Differenzstroms in einfacher Weise dem Knotenpunkt zugeführt werden. Der Inverter ist dabei nach dem Summationspunkt angeordnet, an dem der Referenzstrom dem betreffenden Fotostrom überlagert wird. D.h., im Inverter wird die Summe des Referenzstroms und des betreffenden Fotostroms invertiert.

Vorzugsweise ist die erste Elektrode der zweiten Fotodiode im Inverter mit einem invertierenden Eingang eines ersten Operationsverstärkers verbunden, dessen Ausgang über einen ersten Widerstand mit dem invertierenden Eingang des ersten Operationsverstärker und über einen gleich grossen zweiten Widerstand mit dem Knotenpunkt verbunden ist. Durch die Wahl identischer Widerstände wird ein identischer Strom mit umgekehrter Polarität erzeugt.

Der Knotenpunkt, dem die beiden Fotoströme sowie der jeweils einem der beiden Fotoströme überlagerte Referenzstrom zugeführt werden, liegt am Eingang eines Integrators, an dessen Ausgang ein Integratorsignal gebildet wird. Der den Knotenpunkt durchlaufende Differenzstrom wird in einer bevorzugten Ausgestaltung dem invertierenden Eingang eines als Integrator beschalteten zweiten Operationsverstärkers zugeführt, dessen Ausgang durch einen Kondensator mit dem invertierenden Eingang verbunden ist, der mittels des Differenstroms geladen oder entladen wird.

Das vom Integrator abgegebene Integratorsignal wird in einem Komparator mit einem zyklisch verlaufenden Rampensignal verglichen, welches die genannte Periodendauer aufweist, die der Summe der beiden Periodenanteile entspricht. Das Integratorsignal wird vorzugsweise einem ersten Eingang eines dritten bzw. eines als Komparator beschalteten Operationsverstärkers zugeführt, an dessen zweitem Eingang das Rampensignal anliegt, und an dessen Ausgang das vorzugsweise rechteckförmige Komparatorsignal abgegeben wird.

Das Rampensignal wird vorzugsweise mittels eines ersten Zählers erzeugt, der innerhalb der Periodendauer von einem Anfangswert bis zu einem Endwert hochzählt und dann zurückgesetzt wird. Das digitale Ausgangssignal wird in einem Rampengenerator in eine dazu korrespondierende Spannung gewandelt. Das Rampensignal durchläuft zyklisch einen Spannungsbereich, innerhalb dessen das Integratorsignal liegt. Mittels des Rampensignals kann somit festgestellt werden, zu welchem Punkt innerhalb des Spannungsbereichs sich das Integratorsignal bewegt hat. Jeweils bei Erreichen des Schnittpunktes zwischen dem Integratorsignal und dem Rampensignal wird das Ausgangssignal des Komparators umgeschaltet. Mit dem Zurücksetzen des Rampensignals nach Ablauf der Periodendauer wird auch das Ausgangssignal des Komparators wieder zurückgesetzt. Am Ausgang des Komparators resultiert somit ein Rechtecksignal, dessen Tastverhältnis abhängig ist vom Ausgangssignal des Integrators und somit der Differenz der beiden Fotoströme. Das Komparatorsignal ist ein sogenanntes pulsweitenmoduliertes Signal bzw. ein PWM-Signal.

Das pulsweitenmodulierte Komparatorsignal wird dem Steuereingang des Schalters zugeführt, sodass der Referenzstrom in Abhängigkeit des Tastverhältnisses des Komparatorsignals alternierend dem ersten und dem zweiten Fotostrom überlagert wird. Sobald das Integratorsignal, zum Zeitpunkt, an dem sich das Integratorsignal und das Rampensignal schneiden, proportional zur Differenz der Fotoströme ist, wird ein Tastverhältnis erreicht, welches bewirkt, dass sich die Summe des ersten Fotostroms und des während der ersten Zeitperiode zugeschalteten Referenzstroms einerseits und die Summe des zweiten Fotostroms und des während der zweiten Zeitperiode zugeschalteten Referenzstroms andererseits vollständig kompensieren. Sofern die mit dem Messhebel der Waage verbundene Blende nicht weiter bewegt wird, bleibt auch das Integratorsignal unverändert.

In einer erfindungsgemässen Waage mit elektromagnetischer Kraftkompensation wird das pulsweitenmodulierte Komparatorsignal hingegen zusätzlich dazu verwendet, die Blende jeweils in eine Ausgangslage zurückzuführen, in der das von der Lichtquelle, z.B. einer Leuchtdiode, abgegebene Licht vorzugsweise zu gleichen Anteilen zu den beiden Fotodioden gelangt.

Die Waage mit elektromagnetischer Kraftkompensation umfasst einen Ausleger, von dem eine zu messende Kraft über eine Koppel auf ein erstes Endstück eines drehbar gelagerten Messhebels übertragbar ist, dessen zweites Endstück einerseits eine Spule in einem Magnetfeld und andererseits die Blende hält, durch die Licht von einer Lichtquelle zu übereinander angeordneten Fotodioden gelangt.

Die von den Fotodioden abgegebenen Fotoströme werden als Führungsgrössen zu der in einer Regeleinrichtung vorgesehenen Differenzmessschaltung geführt, von der das dazu korrespondierende vorzugsweise pulsweitenmodulierte Komparatorsignal bzw. eine dazu korrespondierende analoge Rückführgrösse einem analogen Regler oder besonders bevorzugt eine digitale Rückführgrösse einem digitalen Regler zugeführt wird.

Wie erwähnt wird die Periodendauer des Komparatorsignals, mit dem die Fotoströme umgeschaltet werden, vorzugsweise mittels eines ersten Zählers abgezählt. Der Sollzustand des Tastverhältnisses liegt bei 50/50, d.h. beim Auftritt eines Polaritätswechsels auf halber Rampenhöhe oder in der Mitte der Periodendauer des Komparatorsignals. Da beim Sollzustand des Tastverhältnisses die Differenz der Periodenanteile gleich Null ist, kann somit auch die Differenz der Periodenanteile gegen diesen Sollwert bzw. gegen Null geregelt werden.

Da die Blende und somit das Komparatorsignal stets in den Sollzustand zurückgeführt werden sollen, bildet die Abweichung von diesem Sollzustand die gesuchte Führungsgrösse.

Zur Bildung einer digitalen Rückführgrösse wird z.B. mit einem zweiten Zähler die Anzahl Zählerschritte nach Auftreten des Polaritätswechsels bis zum Erreichen des Sollwerts oder, sofern eine Auslenkung der Blende in die andere Richtung erfolgt ist, vom Sollwert bis zum Auftreten des Polaritätswechsels gezählt. Mittels des zweiten Zählers kann daher aus der Differenz der Periodenanteile t₁, t₂ des Komparatorsignal aus oder einem Teil oder Mehrfachen davon oder auf andere Weise aus dem Tastverhältnis des Komparatorsignals eine digitale Messgrösse gebildet werden, die proportional zur Position der verschiebbaren Blende ist.

Der vorzugsweise digitale Regler, der üblicherweise ein Vergleichsglied und ein Regelglied aufweist, berechnet bei dieser vorzugsweisen Ausgestaltung der Erfindung in der Folge eine digitale Stellgrösse, unter Anwendung derer die Führungsgrösse gegen den Sollwert geführt wird. Das Vergleichsglied kann im vorliegenden Fall entfallen, da der Sollwert bzw. die konstante Führungsgrösse gleich Null ist und die dem Regelglied zugeführte Rückführungsgrösse gleich der Regeldifferenz ist.

Das Regelglied, welches vorzugsweise als PID-Regler arbeitet, wertet die Regeldifferenz, also die Information darüber, ob, wie und wie weit die Regelgrösse bzw. die Rückführungsgrösse vom aktuellen Sollwert abweicht, als Eingangsgrösse aus und berechnet daraus eine digitale Reglerausgangsgrösse, die zur Regeldifferenz und zur erfolgten Gewichtsänderung korrespondiert und somit einer gespeicherten digitalen Stellgrösse überlagert wird, die zum Gewicht korrespondiert, welches vor der Gewichtsänderung gemessen wurde.

Die aktualisierte digitale Stellgrösse wird in einem nachgeschalteten D/A-Wandler in eine dazu korrespondierende analoge Stellgrösse gewandelt, für die in einer Treiberschaltung ein dazu proportionaler Kompensationsstrom erzeugt und der Spule zugeführt wird.

Durch die erzeugte magnetische Kraft wird die zu messende Kraft kompensiert und der Messhebel in die Ausgangslage zurückgeführt, in der das Licht von der Lichtquelle durch die Blende zu gleichen Teilen zu den beiden Fotodioden gelangt. In dieser Position wird die Regeldifferenz wieder Null.

Bei einer Änderung des auf der Waage aufliegenden Gewichts von z.B. einem Prozent wird die Blende verschoben, wodurch eine Differenz der Fotoströme resultiert, die durch eine Änderung der digitalen Stellgrösse korrigiert wird. Liegt z.B. ein Gewicht von 1000g auf der Waagschale, so hat die Stellgrösse z.B. den binären Wert 1111101000. Bei einer Abweichung von 1 % bzw. bei der Erhöhung des Gewichts um 10g resultiert eine entsprechende Regeldifferenz und der Regler in der Ausgestaltung eines Proportionalreglers berechnet eine digitale Reglerausgangsgrösse mit dem Wert 1010. Unter Berücksichtigung der ermittelten digitalen Reglerausgangsgrösse wird der Wert der Stellgrösse somit erhöht und liegt nach der Gewichtsänderung bei 1111110010.

Vorzugsweise ist der Regler ein Rechner, in dem ein Betriebsprogramm implementiert ist, mittels dessen Messprozesse steuerbar sind. Die digitale Stellgrösse wird dabei vorzugsweise unter Berücksichtigung des gesteuerten Messprozesses berechnet, wobei z.B. für eine erwartete Gewichtsänderung von einem Prozent bereits vorab eine Änderung der Stelle Grösse um 0,5 % vorgenommen und der digitale Stellwert von 1111101000 auf 1111101101 gesetzt und nach Eintreten der Gewichtsänderung gegen den Endwert geführt wird.

Ferner können Filter gesetzt werden, mittels denen die digitalen Messgrössen gefiltert werden. Die Filterparameter können wiederum unter Berücksichtigung der erwarteten Änderungen gewählt werden, sodass Filterprozesse wenig Zeit in Anspruch nehmen oder optimierte Signalformen resultieren.

In einer weiteren vorzugsweisen Ausgestaltung wird der Regler mit wenigstens einem Sensor verbunden, mittels dessen eine Störgrösse gemessen und die digitale Stellgrösse unter Berücksichtigung der aufgetretenen Störung berechnet wird. Der Regler wird dazu vorzugsweise mit Softwareroutinen versehen, die für die Behandlung der betreffenden Störungen vorgesehen sind.

Die erfindungsgemässe Waage mit elektromagnetischer Kraftkompensation kann somit derart an die Umgebung und an Messprozesse angepasst werden, die den Regelprozess beeinflussen, dass optimale Messresultate erzielt werden können.

Nachfolgend wird die Erfindung anhand von Zeichnungen näher erläutert. Dabei zeigt:
- Fig. 1: die eingangs beschriebene und aus [1], DE 101 53 603 A1, bekannte Waage mit elektromagnetischer Kraftkompensation,
- Fig. 2a: die eingangs beschriebene Differenzmessschaltung 1' der Waage von Fig. 1 mit einem Schalter SW in einer ersten Position, in der nur der Fotostrom I1 einer ersten Fotodiode D1 in der Differenzmessschaltung 1' verarbeitet wird;
- Fig. 2b: die Differenzmessschaltung 1' von Fig. 2a mit dem Schalter SW in einer zweiten Position, in der nur der Fotostrom I2 einer zweiten Fotodiode D2 in der Differenzmessschaltung 1' verarbeitet wird;
- Fig. 3a: die erfindungsgemässe Differenzmessschaltung 1 mit zwei Fotodioden D1, D2, von denen ein Fotostrom I₁ direkt und ein Fotostrom I₂ über einen Inverter INV zu einem Knotenpunkt K_{Δ} geführt werden sowie mit einem Schalter SW, der einen Referenzstrom I_{Ref} bzw. I_{Ref1}, I_{Ref2} innerhalb einer Periodendauer alternierend dem ersten und dem zweiten Fotostrom I₁ bzw. I₂ überlagert;
- Fig. 3b: die Differenzmessschaltung 1 von Fig. 3a mit dem Schalter SW in einer Position, in der der Referenzstrom I_{Ref} bzw. I_{Ref1}, I_{Ref2} dem zweiten Fotostrom I₂ überlagert wird;
- Fig. 4: Signalverläufe von Strömen und Signalen, die innerhalb der Differenzmessschaltung 1 von Fig. 3a bei idealen Arbeitsbedingungen auftreten; und
- Fig. 5: eine erfindungsgemässe Waage mit elektromagnetischer Kraftkompensation, die eine Regeleinrichtung 10 umfasst, innerhalb der der Differenzmessschaltung 1 von Fig. 3a die Fotoströme I₁ und I₂ als Regelgrössen zugeführt werden und von der ein pulsweitenmoduliertes Signal s_{PWM} einem digitalen Regler R_{D} zugeführt wird.

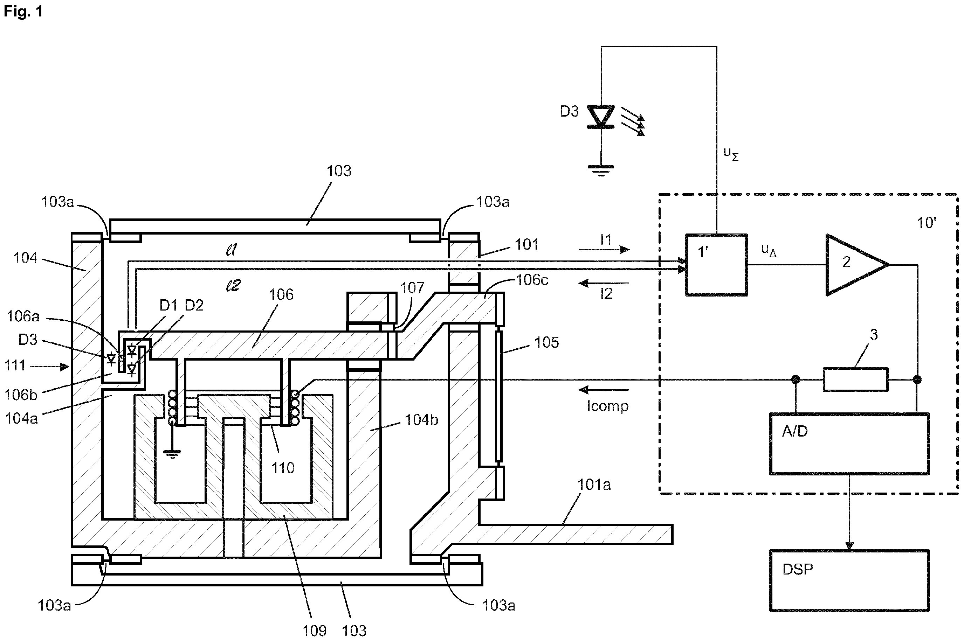

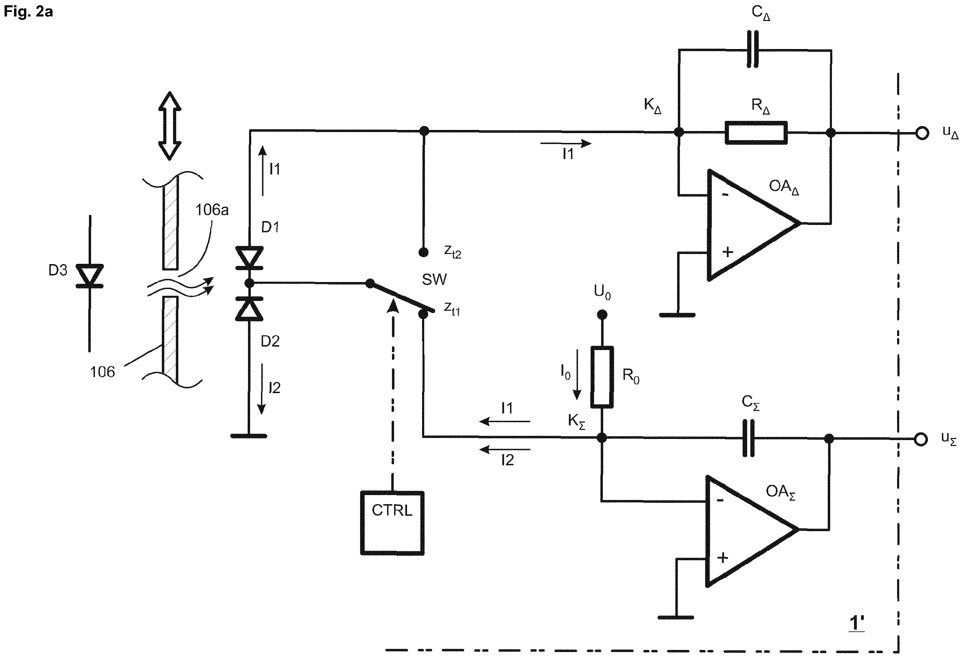

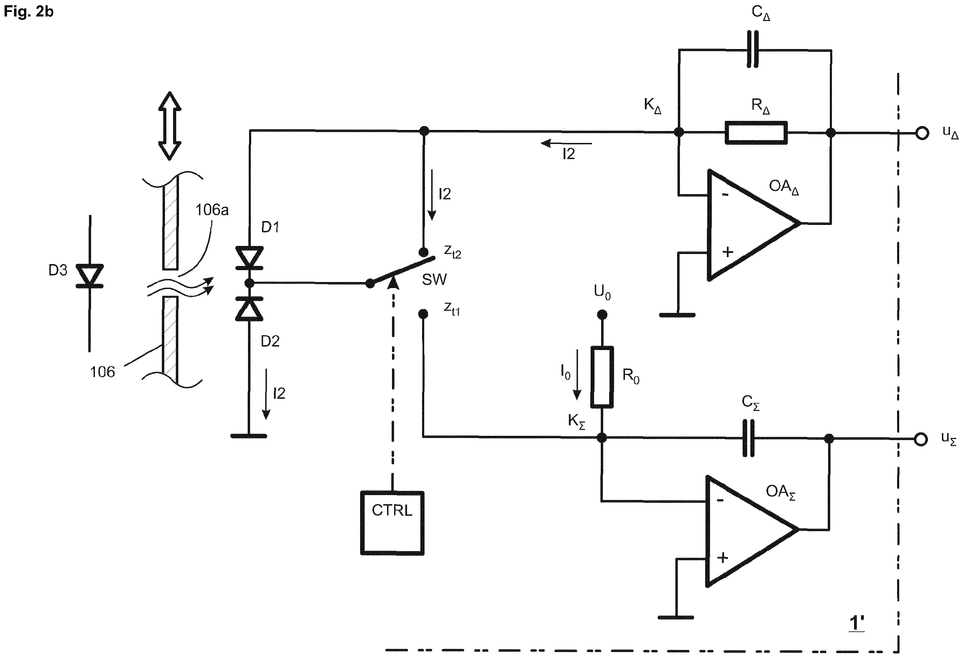

Die in Fig. 1 gezeigte Waage mit elektromagnetischer Kraftkompensation sowie die in den Figuren 2a und 2b gezeigte Differenzmessschaltung 1' wurden eingangs beschrieben.

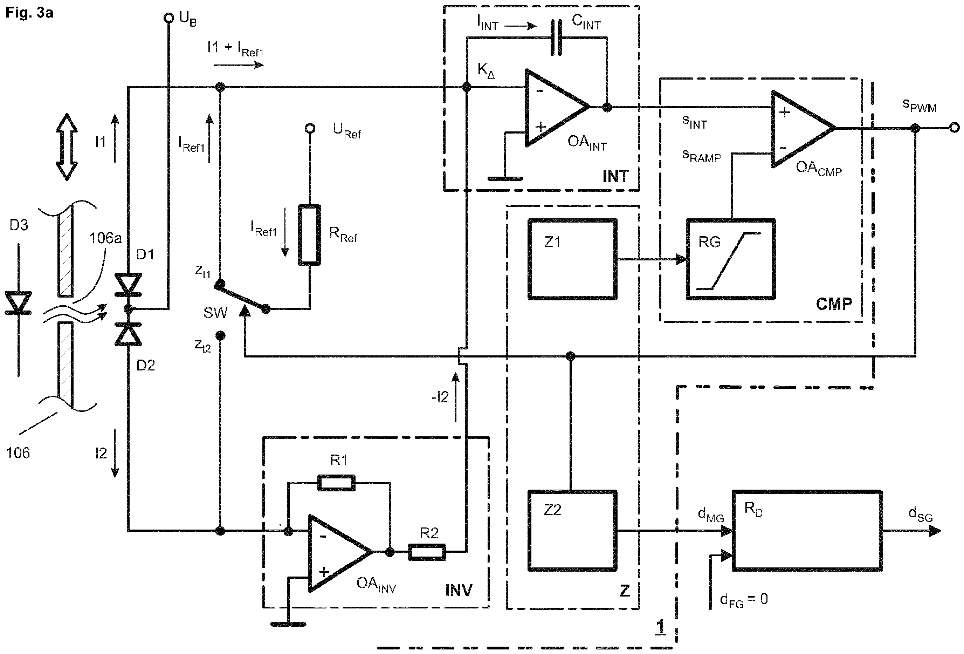

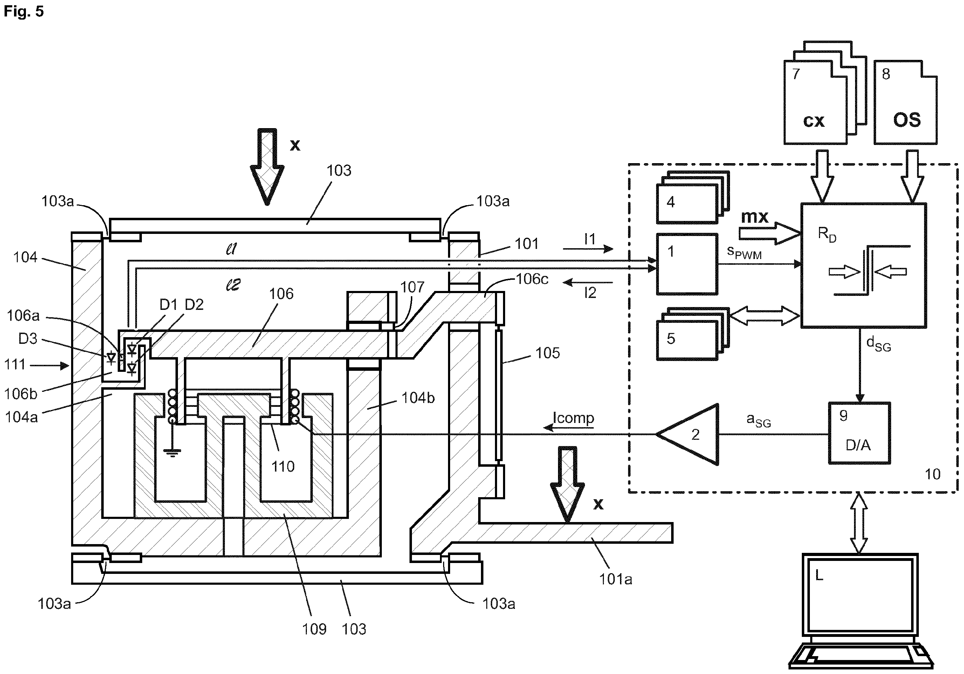

Fig. 3a zeigt eine erfindungsgemässe Differenzmessschaltung 1, die bei der Waage mit elektromagnetischer Kraftkompensation von Fig. 5 in einer Regeleinrichtung 10 eingesetzt wird.

Die Differenzmessschaltung 1 von Fig. 3a umfasst zwei Fotodioden D1, D2, denen Licht von einer Lichtquelle D3, vorzugsweise einer Leuchtdiode, durch eine Öffnung 106a in einer verschiebbaren Blende zuführbar ist, die an einem zweiten Endstück 106b eines drehbar gelagerten Messhebels 106 vorgesehen ist, wie dies bereits mit Bezug auf Fig. 1 beschrieben wurde. In der Ausgangslage der Blende wird Licht gleichmässig auf beide Fotodioden D1 und D2 übertragen, sodass diese gleich grosse Fotoströme I₁ und I₂ an Anschlussleitungen I1, I2 abgeben. Bei einer Änderung der Krafteinwirkung auf den Messhebel 106 und einer Verschiebung der Blende werden die Fotodioden D1 und D2 mit unterschiedlichen Lichtanteilen beaufschlagt, weshalb unterschiedliche Fotoströme I₁ und I₂ an die Anschlussleitungen I1, I2 abgegeben werden.

Die Kathoden der Fotodioden D1 und D2 sind permanent mit einem gemeinsamen Spannungspotential UB und nicht wie bei der Schaltungsanordnung von Fig. 2a mit einem Schalter verbunden. Die Fotodioden D1 und D2 können daher in einem gewählten Arbeitsbereich stabil betrieben werden. Vorzugsweise wird an die Kathoden der Fotodioden D1 und D2 ein positives Spannungspotential U_{B} bzw. eine positive Vorspannung oder Sperrspannung angelegt, wodurch die Fotodioden D1 und D2 Sperrbereich betrieben werden. Von der Anode der ersten Fotodiode D1 wird ein erster Fotostrom I₁ einem Knotenpunkt K_{Δ} direkt zugeführt. Von der Anode der zweiten Fotodiode D2 wird ein zweiter Fotostrom I₂ über einen Inverter INV dem Knotenpunkt K_{Δ} direkt zugeführt. Im Inverter INV wird die Polarität des zweiten Fotostroms I₂ invertiert, dem gegebenenfalls ein Referenzstrom I_{Ref2} überlagert ist.

Dazu wird der zweite Fotostrom I₂ dem invertierenden Eingang eines ersten Operationsverstärkers OA_{INV} zugeführt, dessen Ausgang einerseits über einen ersten Widerstand R1 mit dem invertierenden Eingang und andererseits über einen zweiten Widerstand R2 mit dem Knotenpunkt K_{Δ} verbunden ist. Der zweite Fotostrom I₂ durchfliesst den ersten Widerstand R1, weshalb über dem ersten Widerstand R1 eine Spannung resultiert, die dem Produkt I₂ * R1 entspricht. Da sowohl der erste und der zweite Widerstand R1, R2 mit einem Ende virtuell an Masse liegen, resultiert über dem zweiten Widerstand R2 dasselbe Spannungspotential wie über dem ersten Widerstand R1. Da beide Widerstände R1, R2 gleich gross sind aber mit unterschiedlichen Enden an Masse liegen, fliesst im Widerstand R2 derselbe Strom wie im Widerstand R1, aber mit umgekehrtem Vorzeichen. Der zweite Fotostrom I₂ wird dem Knotenpunkt K_{Δ} daher mit umgekehrter Polarität zugeführt.

Durch den Schalter SW, der innerhalb einer Periodendauer einmal vor und wieder zurück geschaltet wird, wird in einem ersten Periodenanteil t₁ in der Position zₜ₁ ein Referenzstrom I_{Ref1} dem ersten Fotostrom I₁ überlagert. In einem zweiten Periodenanteil t₂ in der Position zₜ₂ wird der Referenzstrom I_{Ref2} dem zweiten Fotostrom I₂ überlagert.

Der symbolisch gezeigte Umschaltkontakt des Schalters SW, der vorzugsweise als Halbleiterschalter ausgebildet ist, ist über einen Referenzwiderstand R_{Ref} mit eigener Referenzspannung U_{Ref} verbunden. Der Referenzstrom I_{Ref} entspricht daher dem Quotienten U_{Ref}/R_{Ref}. Beide Punkte, an denen der Referenzströme I_{Ref1} bzw. I_{Ref2} dem betreffenden Fotostrom I₁ bzw. I₂ überlagert werden, liegen virtuell an Masse, weshalb in beiden Position des Schalters SW die Referenzspannung U_{Ref} am Referenzwiderstand R_{Ref} anliegt und die beiden Referenzströme I_{Ref1} bzw. I_{Ref2} identisch sind und vereinfachend auf einen einzigen Referenzstrom I_{Ref} Bezug genommen werden kann.

Da auf eine Umschaltung der Fotoströme I₁ und I₂ verzichtet und stattdessen der Referenzstrom I_{Ref} umgeschaltet wird, ergeben sich stabilere Verhältnisse, die es vorteilhaft erlauben anstelle einer Referenzspannungsquelle eine Betriebsspannung der Schaltungsanordnung als Referenzspannung U_{Ref} zu verwenden.

Der Knotenpunkt K_{Δ} liegt am Eingang eines Integrators INT bzw. am invertierenden Eingang eines darin vorgesehenen zweiten Operationsverstärkers OA_{INT}, dessen Ausgang über einen Kondensator C_{INT} mit dem Knotenpunkt K_{Δ} verbunden ist, weshalb die in den Periodenanteilen t₁, t₂ auftretenden Differenzströme als Integratorstrom I_{INT} dem Kondensator C_{INT} zufliessen und diesen laden oder entladen. Sofern sich die Ströme am Knotenpunkt K_{Δ} gegenseitig aufheben, bleiben die Ladung des Kondensators C_{INT} und dessen Ausgangssignal bzw. das Integratorsignal s_{INT} am Ausgang des zweiten Operationsverstärkers OA_{INT} unverändert. Durch die alternierende Zuschaltung des Referenzstroms I_{Ref} in den beiden Periodenanteilen t₁, t₂ soll dieser Zustand erreicht werden, sobald das Integratorsignal s_{INT}, zum Zeitpunkt, an dem sich das Integratorsignal s_{INT} und das Rampensignal s_{RAMP} schneiden, proportional zur Auslenkung der Blende und zur Differenz der Fotoströme I₁, I₂ ist. Somit ist das Integratorsignal s_{INT} zu messen und mit einem Referenzsignal zu vergleichen und in Abhängigkeit davon ein entsprechendes Umschaltsignal für den Schalter SW derart zu erzeugen, dass der Differenzstrom am Knotenpunkt K_{Δ} gleich Null wird, wenn das Integratorsignal s_{INT} einen Wert erreicht hat, der proportional zur Auslenkung der Blende ist.

Dazu wird das Integratorsignal s_{INT} einem Komparator CMP bzw. darin dem nicht invertierenden Eingang eines dritten Operationsverstärkers OA_{CMP} zugeführt, an dessen invertierenden Eingang ein Rampensignal s_{RAMP} angelegt wird, das vorzugsweise zum Spannungsbereich korrespondiert, der vom Integratorsignal s_{INT} durchlaufen werden kann. Das Rampensignal s_{RAMP} wird von einem Rampengenerator RG erzeugt an dessen Eingang ein Zählersignal eines ersten Zählers angelegt wird. Der erste Zähler Z1 zählt periodisch hoch, wobei der Rampengenerator RG ein entsprechendes analoges Signal erzeugt. Nach Ablauf der Periodendauer wird der erste Zähler Z1 zurückgesetzt und läuft erneut hoch. Sobald das Rampensignal s_{RAMP} den Wert des Integratorsignals s_{INT} erreicht, schaltet der Komparator bzw. der erste Operationsverstärker OA_{CMP} um, weshalb an dessen Ausgang ein pulsweitenmoduliertes Komparatorsignal s_{PWM} resultiert.

Das Komparatorsignal s_{PWM} wird in der Folge dem Steuereingang des Schalters SW zugeführt, sodass die Zeitperioden t₁, t₂, in denen der Referenzstrom I_{Ref} den Fotoströmen I₁, I₂ überlagert wird so lange geändert werden, bis am Knotenpunkt K_{Δ} im Mittel eine Stromdifferenz von Null auftritt und die dem Kondensator C_{INT} zugeführten und entnommenen Ladungen sich kompensieren.

Das Komparatorsignal s_{PWM} wird zudem für die Regelung der Blende verwendet, wobei in einem zweiten Zähler Z2 aus dem Komparatorsignal s_{PWM} eine digitale Mess- oder Rückführungsgrösse s_{MG} abgeleitet wird, wie dies oben beschrieben wurde. Der zweite Zähler Z2 zählt z.B. die Anzahl Schritte nach Auftreten des Polaritätswechsels bis zum Erreichen des Sollwerts der Blende oder, sofern eine Auslenkung der Blende in die andere Richtung erfolgt ist, vom Sollwert bis zum Auftreten des Polaritätswechsels.

Der erste und der zweite Zähler Z1, Z2 sind vorzugsweise in einem gemeinsamen Zählermodul Z enthalten. Beispielsweise wird der nachstehend genannte Regler R_{D} mittels eines Prozessors realisiert, der mehrere Zähler umfasst, die wahlweise programmierbar sind.

Die ermittelte digitale Mess- oder Rückführungsgrösse s_{MG} wird vom Ausgang der Differenzmessschaltung 1 zum Eingang eines digitalen Reglers R_{D} geführt. Da die Führungsgrösse d_{FG} vorzugsweise gleich Null ist und die Mess- oder Rückführungsgrösse s_{MG} somit die Regelabweichung bildet und gegen Null zu regeln ist, wird diese von einem Regelglied zugeführt, das eine dazu korrespondierende digitale Stellgrösse d_{SG} berechnet, mittels der die Blende wieder in die Ausgangslage zurückgeführt wird. Wie dies oben erläutert wurde, wird für eine Gewichtsänderung jeweils die notwendige Änderung der Stellgrösse d_{SG} berechnet, mit der die Blende zuvor für ein bestimmtes Gewicht in die Ausgangslage geführt wurde. Die vom Regler R_{D} ermittelte Stellgrösse wird somit zu einer gespeicherten Stellgrösse addiert, die zum Gericht korrespondiert, die vor der Gewichtsänderung gemessen wurde.

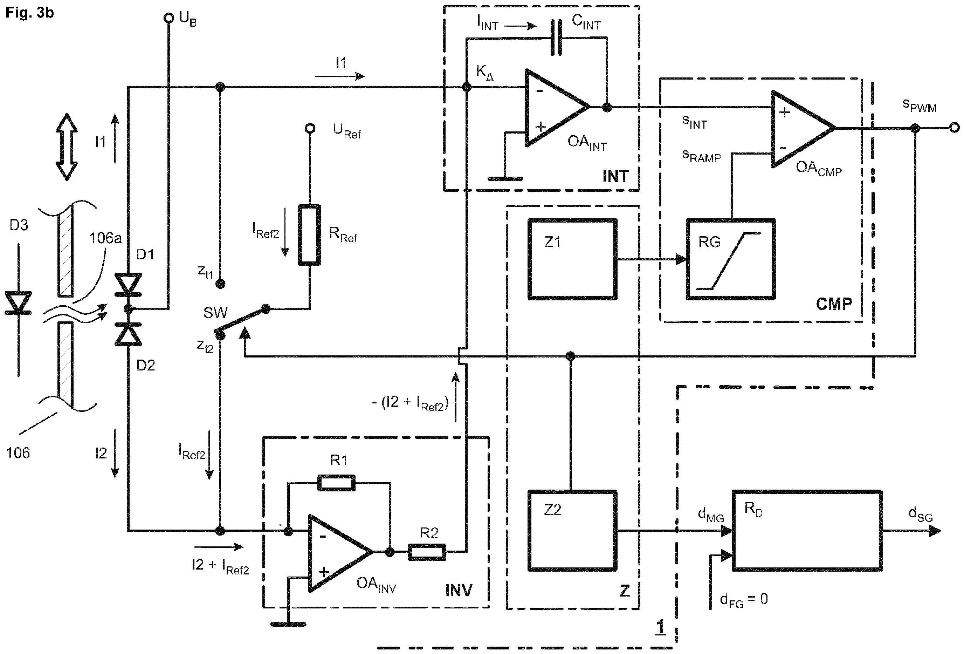

Fig. 3b zeigt die Differenzmessschaltung 1 von Fig. 3a mit dem Schalter SW in einer Position, in der der Referenzstrom I_{Ref2} bzw. I_{Ref} dem zweiten Fotostrom I₂ überlagert wird. Nun wird die Summe des zweiten Fotostroms I₂ und des Referenzstroms I_{Ref} dem Inverter INV zugeführt und von diesem am Ausgang invertiert abgegeben.

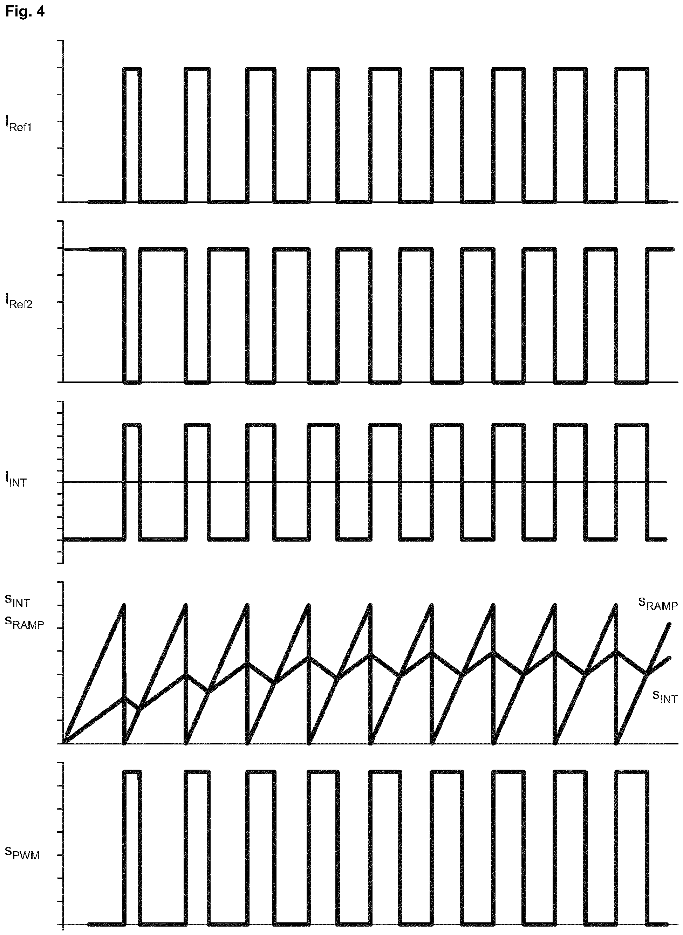

Fig. 4 zeigt Signalverläufe von Strömen und Signalen, die innerhalb der Differenzmessschaltung 1 von Fig. 3a auftreten. Zuerst sind die Verläufe der Referenzströme I_{Ref1}, I_{Ref2} gezeigt, die durch alternierende Betätigung des Schalters SW dem ersten und dem zweiten Fotostrom I₁, I₂ überlagert werden. Das dritte Diagramm zeigt den Verlauf des Integratorstroms I_{INT}. Das vierte Diagramm zeigt das Integratorsignal s_{INT} und das periodisch und sägezahnförmig verlaufende Rampensignal s_{RAMP}. Im letzten Diagramm ist das rechteckförmige und pulsweitenmodulierte Komparatorsignal s_{CMP} gezeigt, welches ansteigende Flanken beim Abfallen des Rampensignals s_{RAMP} und abfallende Flanken zu den Zeitpunkten aufweist, zu denen das Rampensignal s_{RAMP} den Wert Integratorsignals s_{INT} durchläuft.

Es ist ersichtlich, dass eine aufgetretene Regelabweichung ausgeregelt wird und dass pulsweitenmodulierte Komparatorsignal s_{CMP} sowie die davon abhängigen beiden ersten Signalverläufe I_{Ref1}, I_{Ref2} hin zu einem Tastverhältnis von 50/50 geregelt werden. Konsequenterweise ändert sich auch der Integratorstrom I_{INT} entsprechend. Das Integratorsignal s_{INT} läuft hoch und liegt zuletzt etwa in der Mitte des Verlaufs des Rampensignals s_{RAMP}, wodurch am Ausgang des Komparators CMP das pulsweitenmodulierte Komparatorsignal s_{CMP} mit einem Tastverhältnis von 50/50 resultiert.

Fig. 5 zeigt eine erfindungsgemässe Waage mit elektro-magnetischer Kraftkompensation, die eine Regeleinrichtung 10 umfasst, innerhalb der der Differenzmessschaltung 1 von Fig. 3a die Fotoströme I₁ und I₂ als Regelgrössen zugeführt werden und von der ein pulsweitenmoduliertes Signal s_{PWM} einem digitalen Regler R_{D} zugeführt wird, der die oben beschriebenen Aufgaben erfüllt.

Da in dieser Ausgestaltung der Schaltungsanordnung das vorzugsweise pulsweitenmodulierte Signal s_{PWM} und nicht die Regelabweichung zum Regler R_{D} übertragen wird, ermittelt der erweiterte prozessorgesteuerte Regler R_{D}, z.B. in der oben beschriebenen Weise, die Regelabweichung und ermittelt eine digitale Stellgrösse d_{SG}, die zu einem D/A-Wandler 9 übertragen wird, von dem eine dazu korrespondierende analoge Stellgrösse a_{SG} zu einer Treiberschaltung 2 überträgt, die einen Kompensationsstrom I_{comp} an die Kompensationsspule 110 abgibt.

In vorzugsweisen Ausgestaltungen werden bei der Verarbeitung der Signale im Regelkreis von Fig. 5 erfindungsgemäss Informationen berücksichtigt, die den Messprozess beeinflussen können und nicht unmittelbar von einer Verschiebung der Blende bzw. einer Drehung des Messhebels 106 abgeleitet werden, sondern von weiteren Informationsquellen geliefert werden.

Mittels Sensoren 4 werden auf die Waage einwirkende Störungen x erfasst und entsprechende Messsignale mx an den Regler RD geliefert. Zur Behandlung dieser Störungen sind Softwareroutinen 7 mit Instruktionen zur entsprechenden Einflussnahme auf den Regelkreis vorgesehen.

Auch durch Bewegungen des Messguts können Störungen x auf den Regelungsprozess einwirken. Diese Bewegungen des Messguts können wiederum mittels Sensoren 4 erfasst oder durch Betriebsprogramme in der Waage oder in einem Leitrechner L gemeldet werden.

Die einzelnen Reglerparameter werden vorzugsweise in Abhängigkeit der genannten Einwirkungen bzw. Störungen entsprechend gesteuert. Bei der Verwendung eines PID Reglers werden beim Auftreten von Störungen die Gewichtungsfaktoren, der P-, I- und D-Komponenten entsprechend gewichtet. Zudem kann vorausschauend eine Regelabweichung eingeführt werden, mittels der eine erwartete Gewichtsänderung kompensiert wird.

Ferner können digitale Filter 5 eingesetzt oder deren Filterparameter geändert werden, um die im digitalen Regler R_{D} verarbeitet Signale zu filtern.

### Literaturverzeichnis

[1] DE101 53 603 A1
[2] US 3,727,708 A
[3] DE 2 311 676 A

### Liste der Bezugszeichen

- 1: Erfindungsgemässe Differenzmessschaltung
- 1': Differenzmessschaltung gemäss Stand der Technik
- 2: Treiberschaltung
- 4: Sensor
- 5: digitaler Filter
- 7, cx: Softwareroutinen
- 8, OS: Betriebsprogramm
- 9: D/A-Wandler
- 10: erfindungsgemässe Regeleinrichtung
- 10': Regeleinrichtung gemäss Stand der Technik
- 101: Gehänge
- 101a: Ausleger
- 103: Parallelführungslenker
- 103a: Biegelager
- 104: Konsole
- 104a: Winkelteil
- 104b: Teil der Konsole
- 105: Koppel
- 106: beweglicher Messhebel
- 106a: Schlitzöffnung
- 106b: zweites Endstück, Blende
- 106c: erstes Endstück
- 107: Biegelager
- 109: Permanentmagnetsystem
- 110: Spule
- 111: opto-elektrische Messvorrichtung
- D1: erste Fotodiode
- D2: zweite Fotodiode
- D3: Lichtquelle
- I₀: Referenzstrom
- I1: erster Fotostrom
- I2: zweiter Fotostrom
- I_{comp}: Kompensationsstrom
- I_{Ref1}: erster Referenzstrom
- I_{Ref2}: zweiter Referenzstrom
- I_{INT}: Integratorstrom
- U_{∑}: Summenspannung
- U_{Δ}: Differenzspannung, proportionales Ausgangssignal
- U₀: Referenzspannungsquelle
- U_{Ref}: Referenzspannung
- U_{B}: Spannungspotential
- R₀: Referenzwiderstand
- R1: erster Widerstand
- R2: zweiter Widerstand
- R_{Δ}: Widerstand des ersten Operationsverstärkers
- R_{Ref}: Referenzwiderstand
- C_{∑}: Kondensator des zweiten Operationsverstärkers
- C_{Δ}: Kondensator des ersten Operationsverstärkers
- C_{INT}: Kondensator des Integrators
- K_{Σ}: Knotenpunkt des zweiten Operationsverstärkers
- K_{Δ}: Knotenpunkt des ersten Operationsverstärkers
- zₜ₁: Schalterzustand im ersten Periodenanteil
- zₜ₂: Schalterzustand im zweiten Periodenanteil
- t1: erster Periodenanteil
- t2: zweiter Periodenanteil
- S_{INT}: Integratorsignal
- S_{RAMP}: Rampensignal
- s_{PWM}: pulsweitenmoduliertes Komparatorsignal
- S_{CMP}: Komparatorsignal
- s_{MG}: Mess- oder Rückführungsgrösse
- d_{MG}: Digitale Messgrösse
- d_{SG}: digitale Stellgrösse
- d_{FG}: digitale Führungsgrösse
- a_{SG}: analoge Stellgrösse
- x: Störung
- mx: Messsignal
- A/D: Wandlermodul
- DSP: Anzeigeeinheit
- CTRL: Steuereinheit
- SW: Schalter
- OA_{Σ}: zweiter Operationsverstärker
- OA_{Δ}: erster Operationsverstärker
- OA_{INV}: invertierender Eingang des ersten Operationsverstärkers
- OA_{INT}: zweiten Operationsverstärker
- OA_{CMP}: dritter Operationsverstärker
- INV: Inverter
- INT: Integrator
- Z: Zählermodul
- Z1: erster Zähler
- Z2: zweiter Zähler
- CMP: Komparator
- RG: Rampengenerator
- R_{D}: digitaler Regler
- L: Leitrechner

## Patentansprüche

1. Differenzmessschaltung (1) für eine Waage mit elektromagnetischer Kraftkompensation, der von zwei Fotodioden (D1, D2) abgegebene Fotoströme (I₁, I₂) zuführbar sind und die geeignet ist, ein zur Differenz dieser Fotoströme (I₁, I₂) proportionales Ausgangssignal zu erzeugen, mit einem Schalter (SW), der innerhalb von zwei Periodenanteilen t, t₂ einer Periodendauer T zwischen zwei Zuständen (zₜ₁, zₜ₂) umschaltbar ist, um den Stromfluss durch einen Knotenpunkt (K_{Δ}) zu beeinflussen, dem die beiden Fotoströme (I₁, I₂) zuführbar sind, **dadurch gekennzeichnet, dass**
der Schalter (SW) derart steuerbar ist, dass ein von einer Spannungs- oder Stromquelle (U_{Ref}) abgegebener Referenzstrom (I_{Ref}) innerhalb der Periodenanteile t₁, t₂ alternierend einem der beiden Fotoströme (I₁, I₂) überlagerbar ist, die dem Knotenpunkt (K_{Δ}) permanent zufliessen;
und dass der Knotenpunkt (K_{Δ}) am Eingang eines Integrators (INT) liegt, dessen Integratorsignal (s_{INT}) in einem Komparator (CMP) mit einem zyklisch verlaufenden Rampensignal (s_{RAMP}) vergleichbar ist, welches die Periodendauer T aufweist, wobei am Ausgang des Komparators (CMP) ein rechteckförmiges Komparatorsignal (s_{PWM}) erzeugbar ist, dessen Tastverhältnis durch den Schnittpunkt des Integratorsignal (s_{INT}) und des Rampensignals (s_{RAMP}) definiert ist und das einem Steuereingang des Schalters (SW) zuführbar ist.

2. Differenzmessschaltung (1) nach Anspruch 1, **dadurch gekennzeichnet, dass** die erste Elektrode der ersten Fotodiode (D1) direkt mit dem Knotenpunkt (K_{Δ} verbunden ist, dass die erste Elektrode der zweiten Fotodiode (D2) über einen Inverter (INV), in dem der zweite Fotostrom (I₂) invertiert wird, mit dem Knotenpunkt (K_{Δ}) verbunden ist, und dass die zweiten Elektroden der beiden Fotodioden (D1, D2) mit einem gemeinsamen Spannungspotenzial (U_{B}) verbunden sind.

3. Differenzmessschaltung (1) nach Anspruch 2, **dadurch gekennzeichnet, dass** die erste Elektrode der zweiten Fotodiode (D2) im Inverter (INV) mit einem invertierenden Eingang eines ersten Operationsverstärkers (OA_{INV}) verbunden ist, dessen Ausgang über einen ersten Widerstand (R1) mit dem invertierenden Eingang und über einen gleich grossen zweiten Widerstand (R2) mit dem Knotenpunkt (K_{Δ}) verbunden ist.

4. Differenzmessschaltung (1) nach Anspruch 2 oder 3, **dadurch gekennzeichnet, dass** die Spannungs- oder Stromquelle (U_{Ref}) eine Betriebsspannung der Differenzmessschaltung (1) ist, die auch für andere Bauteile genutzt wird.

5. Differenzmessschaltung (1) nach einem der Ansprüche 1 bis 4, **dadurch gekennzeichnet, dass** eine Lichtquelle, vorzugsweise eine Leuchtdiode (D3) vorgesehen ist, deren Strahlung durch eine verschiebbare Blende den Fotodioden (D1, D2) zuführbar ist.

6. Differenzmessschaltung (1) nach einem der Ansprüche 1 bis 5, **dadurch gekennzeichnet, dass** der Knotenpunkt (K_{Δ}) mit dem invertierenden Eingang eines als Integrator beschalteten zweiten Operationsverstärkers (OA_{INT}) verbunden ist, an dessen Ausgang, der durch einen Kondensator (C_{INT}) mit dem invertierenden Eingang verbunden ist, das Integratorsignal (s_{INT}) anliegt.

7. Differenzmessschaltung (1) nach einem der Ansprüche 1 bis 6, **dadurch gekennzeichnet, dass** das Integratorsignal (s_{INT}) an einem ersten Eingang eines als Komparator beschalteten dritten Operationsverstärkers (OA_{CMP}) anliegt, an dessen zweitem Eingang das Rampensignal (s_{RAMP}) anliegt, und an dessen Ausgang das Komparatorsignal (s_{PWM}) anliegt.

8. Differenzmessschaltung (1) nach Anspruch 7, **dadurch gekennzeichnet, dass** das Rampensignal (s_{RAMP}) in einem ersten Zähler (Z, Z1) erzeugt wird, der innerhalb der Periodendauer T von einem Anfangswert bis zu einem Endwert hochzählt und dann zurückgesetzt wird.

9. Differenzmessschaltung (1) nach einem der Ansprüche 1 bis 8, **dadurch gekennzeichnet, dass,** vorzugsweise mittels eines zweiten Zählers (Z2), aus der Differenz der Periodenanteile t₁, t₂ oder einem Teil davon oder aus dem Tastverhältnis des Komparatorsignals (s_{PWM}) eine digitale Messgrösse (d_{MG}) gebildet wird, die zumindest annähernd proportional zur Position der verschiebbaren Blende ist.

10. Differenzmessschaltung (1) nach Anspruch 9, **dadurch gekennzeichnet, dass** ein Regler (R_{D}) vorgesehen ist, dem die digitale Messgrösse (d_{MG}) als Regelabweichung zuführbar ist und von dem eine dazu korrespondierende digitale Stellgrösse (d_{SG}) erzeugbar ist, mittels der die Blende gegen einen Ausgangspunkt zwischen den beiden Fotodioden (D1, D2) zurückführbar ist.

11. Differenzmessschaltung (1) nach Anspruch 10, **dadurch gekennzeichnet, dass** die vom Regler (R_{D}) abgegebene digitale Stellgrösse (d_{SG}) einem D/A-Wandler (9) zuführbar ist, der eine dazu korrespondierende analoge Stellgrösse (a_{SG}) einer Treiberschaltung (2) zuführt, die einen dazu proportionalen Kompensationsstrom (I_{comp}) an eine Spule (110) abgibt, die von einem drehbar gelagerten Messhebel (106) in einem Magnetfeld verschiebbar gehalten ist, an dessen erstem Endstück (106c) die zu messenden Kraft einleitbar ist und an dessen zweitem Endstück (106b) die Blende vorgesehen ist.

12. Waage mit elektromagnetischer Kraftkompensation mit einem Ausleger (101a), von dem eine zu messende Kraft über eine Koppel (105) auf ein erstes Endstück (106c) eines drehbar gelagerten Messhebels (106) übertragbar ist, dessen zweites Endstück (106b) einerseits eine Spule (101) in einem Magnetfeld und andererseits eine Blende hält, durch die Licht von einer Lichtquelle (D3) zu zwei übereinander angeordneten Fotodioden (D1, D2) übertragbar ist, von denen je ein Fotostrom (I₁; I₂) als Führungsgrösse einer in einer Regeleinrichtung (10) vorgesehenen Differenzmessschaltung (1) nach einem der Ansprüche 1 bis 11 zuführbar ist, von der eine dazu korrespondierende digitale Rückführgrösse (s_{PWM}) erzeugbar ist, für die in einem Regler (R_{D}) eine digitale Stellgrösse (d_{SG}) berechenbar ist, die in einem D/A-Wandler (9) in eine dazu korrespondierende analoge Stellgrösse (a_{SG}) wandelbar ist, für die in einer Treiberschaltung (2) ein dazu proportionaler Kompensationsstrom (I_{comp}) erzeugbar ist, welcher der Spule (110) zuführbar ist.

13. Waage nach Anspruch 12, **dadurch gekennzeichnet, dass**
der Regler (R_{D}) ein Rechner ist, in dem ein Betriebsprogramm (8) implementiert ist, mittels dessen Messprozesse steuerbar sind, wobei die digitale Stellgrösse (d_{SG}) unter Berücksichtigung des gesteuerten Messprozesses berechenbar ist.

14. Waage nach Anspruch 12 oder 13, **dadurch gekennzeichnet, dass**
der Regler (R_{D}) mit Sensoren (4) verbunden ist, mittels denen Störgrössen (x) erfassbar sind und dass im Regler (R_{D}) Subroutinen implementiert sind, mittels denen die digitale Stellgrösse (d_{SG}) unter Berücksichtigung der Störgrössen (x) berechenbar ist.

15. Waage nach Anspruch 12, 13 oder 14, **dadurch gekennzeichnet, dass**
der Regler (R_{D}) ein PID-Regler ist und einen entsprechend ausgestaltetes Regelglied aufweist.

## Claims

1. A difference measuring circuit (1) for a weighing apparatus with electromagnetic force compensation which can be supplied with photocurrents (I₁, I₂) output by two photodiodes (D1, D2) and is suitable for generating an output signal proportional to the difference of those photocurrents (I₁, I₂), with a switch (SW) which can be switched between two states (zₜ₁, zₜ₂) within two period segments t, t₂ of a periodic time T in order to influence current flow through a nodal point (K_{Δ}) which can be supplied with the two photocurrents (I₁, I₂), **characterized in that**
the switch (SW) is controllable such that a reference current (I_{Ret}) output by a voltage or current source (U_{Ref}) can be superimposed in an alternating manner within the period segments t₁, t₂ onto one of the two photocurrents (I₁, I₂) permanently flowing towards the nodal point (K_{Δ});
and **in that** the nodal point (K_{Δ}) is located at the input of an integrator (INT) with its integrator signal (s_{INT}) in a comparator (CMP) being comparable to a cyclical ramp signal (s_{RAMP}) having the periodic time T, wherein at the output of the comparator (CMP), a rectangular comparator signal (s_{PWM}) can be generated with its duty cycle defined by the intersection point of the integrator signal (s_{INT}) and the ramp signal (s_{RAMP}) and which can be supplied to a control input of the switch (SW).

2. The difference measuring circuit (1) according to claim 1, **characterized in that**
the first electrode of the first photodiode (D1) is directly connected to the nodal point (K_{Δ}), **in that** the first electrode of the second photodiode (D2) is connected to the nodal point (K_{Δ}) via an inverter (INV) in which the second photocurrent (I₂) is inverted, and **in that** the second electrodes of the two photodiodes (D1, D2) are connected to a common voltage potential (U_{B}).

3. The difference measuring circuit (1) according to claim 2, **characterized in that**
the first electrode of the second photodiode (D2) is connected in the inverter (INV) to an inverting input of a first operational amplifier (OA_{INV}) with its output connected to the inverting input via a first resistor (R1) and to the nodal point (K_{Δ}) via an equally sized second resistor (R2).

4. The difference measuring circuit (1) according to claim 2 or 3, **characterized in that**
the voltage or current source (U_{Ref}) is an operating voltage of the difference measuring circuit (1) also utilized for other components.

5. The difference measuring circuit (1) according to any one of claims 1 to 4, **characterized in that** a light source, preferably a light-emitting diode (D3), is provided, the radiation of which can be supplied to the photodiodes (D1, D2) through a displaceable aperture.

6. The difference measuring circuit (1) according to any one of claims 1 to 5, **characterized in that** the nodal point (K_{Δ}) is connected to the inverting input of a second operational amplifier (OA_{INT}) wired as an integrator, with the integrator signal (s_{INT}) applied to its output connected to the inverting input through a capacitor (C_{INT}).

7. The difference measuring circuit (1) according to any one of claims 1 to 6, **characterized in that** the integrator signal (s_{INT}) is applied to a first input of a third operational amplifier (OA_{CMP}) wired as a comparator, with the ramp signal (s_{RAMP}) applied to its second input and the comparator signal (s_{PWM}) applied to its output.

8. The difference measuring circuit (1) according to claim 7, **characterized in that**
the ramp signal (s_{RAMP}) is generated in a first counter (Z, Z1) counting up from an initial value to a final value within the periodic time T and then being reset.

9. The difference measuring circuit (1) according to any one of claims 1 to 8, **characterized in that**, preferably by means of a second counter (Z2), a digital measured variable (d_{MG}) at least approximately proportional to the position of the displaceable aperture is formed from the difference of the period segments t₁, t₂ or a part thereof or from the duty cycle of the comparator signal (S_{PWM}).

10. The difference measuring circuit (1) according to claim 9, **characterized in that**
a controller (R_{D}) is provided which can be supplied with the digital measured variable (d_{MG}) as a control deviation and from which a corresponding digital controlled variable (d_{SG}) can be generated, by means of which the aperture can be returned towards an initial point between the two photodiodes (D1, D2).

11. The difference measuring circuit (1) according to claim 10, **characterized in that**
the digital controlled variable (d_{SG}) output by the controller (R_{D}) can be supplied to a D/A converter (9) supplying a corresponding analogous controlled variable (a_{SG}) to a driver circuit (2) outputting a proportional compensation current (I_{comp}) to a spool (110) held displaceable in a magnetic field by a pivoted measuring lever (106), with the force to be measured introducible at its first end piece (106c) and the aperture provided at its second end piece (106b).

12. A weighing apparatus with electromagnetic force compensation with a cantilever (101a) from which a force to be measured can be transferred via a coupler (105) to a first end piece (106c) of a pivoted measuring lever (106), with its second end piece (106b) holding, on the one hand, a spool (101) in a magnetic field, and on the other hand, an aperture through which light can be transferred from a light source (D3) to two photodiodes (D1, D2) disposed on top of each other, from which one photocurrent (I₁; I₂) each can be supplied as a command variable of a difference measuring circuit (1) according to any one of claims 1 to 11 provided in a control device (10), by which a corresponding digital feedback variable (s_{PWM}) can be generated for which a digital controlled variable (d_{SG}) can be computed in a controller (R_{D}) which can be converted into a corresponding analogous controlled variable (a_{SG}) in a D/A converter (9) for which a proportional compensation current (I_{comp}) can be generated in a driver circuit (2) which can be supplied to the spool (110).

13. The weighing apparatus according to claim 12, **characterized in that**
the controller (R_{D}) is a computer implemented in an operating program (8), by means of which measuring processes can be controlled, wherein the digital controlled variable (d_{SG}) can be computed accounting for the controlled measuring process.

14. The weighing apparatus according to claim 12 or 13, **characterized in that**
the controller (R_{D}) is connected to sensors (4), by means of which disturbance variables (x) can be sensed, and **in that** subroutines are implemented in the controller (R_{D}), by means of which the digital controlled variable (d_{SG}) can be computed accounting for the disturbance variables (x).

15. The weighing apparatus according to claim 12, 13 or 14, **characterized in that**
the controller (R_{D}) is a PID controller and has a control element designed correspondingly.

## Revendications

1. Circuit de mesure de différence (1) pour une balance avec équilibrage électromagnétique des forces, auquel les photocourants (I₁, I₂) émis par deux photodiodes (D1, D2) peuvent être transmis et qui est adapté pour générer un signal de sortie proportionnel à la différence entre ces photocourants (I₁, I₂), comportant un commutateur (SW) qui peut être commuté entre deux états (zₜ₁, zₜ₂) pendant deux périodes partielles t, t₂ d'une période T, afin d'influencer le passage du courant à travers un point nodal (K_{Δ}) auquel les deux photocourants (I₁, I₂) peuvent être transmis, **caractérisé en ce que**
le commutateur (SW) peut être commandé de sorte qu'un courant de référence (I_{Ref}) émis par une source de tension ou de courant (U_{Ref}) peut se superposer alternativement pendant les périodes partielles t₁, t₂ à l'un des deux photocourants (I₁, I₂) qui circulent en permanence à travers le point nodal (K_{Δ}) ;
et **en ce que** le point nodal (K_{Δ}) est à l'entrée d'un intégrateur (INT) dont le signal d'intégrateur (s_{INT}) peut être comparé dans un comparateur (CMP) avec un signal de rampe cyclique (s_{RAMP}) qui comporte la période T, dans lequel, à la sortie du comparateur (CMP), un signal de comparateur rectangulaire (s_{PWM}) peut être généré, dont le rapport cyclique est défini par l'intersection du signal d'intégrateur (s_{INT}) et du signal de rampe (s_{RAMP}) et qui peut être transmis à une entrée de commande du commutateur (SW).

2. Circuit de mesure de différence (1) selon la revendication 1, **caractérisé en ce que** la première électrode de la première photodiode (D1) est directement reliée au point nodal (K_{Δ}), **en ce que** la première électrode de la seconde photodiode (D2) est reliée au point nodal (K_{Δ}) via un inverseur (INV) dans lequel le second photocourant (I₂) est inversé, et **en ce que** les secondes électrodes des deux photodiodes (D1, D2) sont reliées à un potentiel de tension commun (U_{B}).

3. Circuit de mesure de différence (1) selon la revendication 2, **caractérisé en ce que** la première électrode de la seconde photodiode (D2) est reliée dans l'inverseur (INV) à une entrée inverseuse d'un premier amplificateur opérationnel (OA_{INV}), dont la sortie est reliée à l'entrée inverseuse via une première résistance (R1) et au point nodal (K_{Δ}) via une seconde résistance (R2) de même taille.

4. Circuit de mesure de différence (1) selon la revendication 2 ou 3, **caractérisé en ce que** la source de tension ou de courant (U_{Ref}) est une tension de fonctionnement du circuit de mesure de différence (1) également utilisée pour d'autres composants.

5. Circuit de mesure de différence (1) selon l'une des revendications 1 à 4, **caractérisé en ce qu'**une source lumineuse, de préférence une diode électroluminescente (D3), est prévue, dont le rayonnement peut être transmis aux photodiodes (D1, D2) via un diaphragme mobile.

6. Circuit de mesure de différence (1) selon l'une des revendications 1 à 5, **caractérisé en ce que** le point nodal (K_{Δ}) est relié à l'entrée inverseuse d'un deuxième amplificateur opérationnel (OA_{INT}) connecté en tant qu'intégrateur, à la sortie duquel le signal d'intégrateur (s_{INT}) est présent, laquelle sortie est reliée via un condensateur (C_{INT}) à l'entrée inverseuse.

7. Circuit de mesure de différence (1) selon l'une des revendications 1 à 6, **caractérisé en ce que** le signal d'intégrateur (s_{INT}) est présent à une première entrée d'un troisième amplificateur opérationnel (OA_{CMP}) connecté en tant que comparateur, à la seconde entrée duquel le signal de rampe (s_{RAMP}) est présent et à la sortie duquel le signal de comparateur (s_{PWM}) est présent.

8. Circuit de mesure de différence (1) selon la revendication 7, **caractérisé en ce que** le signal de rampe (s_{RAMP}) est généré dans un premier compteur (Z, Z1) qui incrémente d'une valeur initiale à une valeur finale pendant la période T et est ensuite remis à zéro.

9. Circuit de mesure de différence (1) selon l'une des revendications 1 à 8, **caractérisé en ce que**, de préférence au moyen d'un second compteur (Z2), une variable de mesure numérique (d_{MG}) est formée à partir de la différence entre les périodes partielles t₁, t₂ ou une partie de celles-ci ou à partir du rapport cyclique du signal comparateur (s_{PWM}), laquelle variable de mesure numérique est au moins approximativement proportionnelle à la position du diaphragme mobile.

10. Circuit de mesure de différence (1) selon la revendication 9, **caractérisé en ce qu'**un régulateur (R_{D}) est prévu, auquel la variable de mesure numérique (d_{MG}) peut être transmise comme écart de régulation et à partir duquel une variable de commande correspondante (d_{SG}) peut être générée, qui permet de ramener le diaphragme à un point de départ entre les deux photodiodes (D1, D2).

11. Circuit de mesure de différence (1) selon la revendication 10, **caractérisé en ce que** la variable de commande numérique (d_{SG}) émise par le régulateur (R_{D}) peut être transmise à un convertisseur N/A (9), à qui est transmis une variable de commande analogique correspondante (a_{SG}) d'un circuit pilote (2) qui délivre un courant d'équilibrage proportionnel (I_{comp}) à une bobine (110) qui est maintenue de manière mobile dans un champ magnétique par un levier de mesure monté en rotation (106), au premier embout (106c) duquel la force à mesurer peut être introduite et au second embout duquel (106b) le diaphragme est prévu.

12. Balance avec équilibrage des forces électromagnétiques comportant une flèche (101a), à partir de laquelle une force à mesurer peut être transmise via un accouplement (105) à un premier embout (106c) d'un levier de mesure monté en rotation (106), dont le second embout (106b) tient d'un côté une bobine (101) dans un champ magnétique et de l'autre côté un diaphragme à travers lequel la lumière d'une source lumineuse (D3) peut être transmise à deux photodiodes (D1, D2) disposées l'une au-dessus de l'autre, à partir de chacune desquelles un photocourant (I₁, I₂) peut être transmis comme variable de guidage d'un circuit de mesure de différence (1) prévu dans un dispositif de régulation (10) selon l'une des revendications 1 à 11, variable de guidage à partir de laquelle une variable de rétroaction numérique correspondante (s_{PWM}) peut être générée, pour laquelle une variable de commande numérique (d_{SG}) peut être calculée dans un régulateur (R_{D}), laquelle variable de commande numérique peut être convertie en une variable de commande analogique correspondante (a_{SG}) dans un convertisseur N/A (9), pour laquelle un courant d'équilibrage (I_{comp}) proportionnel à cette variable de commande analogique peut être généré dans un circuit pilote (2), lequel courant d'équilibrage peut être transmis à la bobine (110).

13. Balance selon la revendication 12, **caractérisée en ce que** le régulateur (R_{D}) est un ordinateur dans lequel un programme d'exploitation (8) est mis en œuvre, au moyen duquel des processus de mesure peuvent être commandés, dans laquelle la variable de commande numérique (d_{SG}) peut être calculée en tenant compte du processus de mesure commandé.

14. Balance selon la revendication 12 ou 13, **caractérisée en ce que** le régulateur (R_{D}) est relié à des capteurs (4) au moyen desquels les variables de perturbation (x) peuvent être enregistrées et **en ce que** des sous-programmes sont mis en œuvre dans le régulateur (R_{D}) au moyen desquels la variable de commande numérique (d_{SG}) peut être calculée en tenant compte des variables de perturbation (x).

15. Balance selon la revendication 12, 13 ou 14, **caractérisée en ce que** le régulateur (R_{D}) est un régulateur PID et qu'il possède un élément de régulation conçu en conséquence.
